# EUROPÄISCHE PATENTSCHRIFT

(11) **EP 2 281 467 B1**
(45) Veröffentlichungstag und Bekanntmachung des Hinweises auf die Patenterteilung: **28.01.2015**
(21) Anmeldenummer: 10168851.3
(22) Anmeldetag: 08.07.2010
(51) Int. Cl.: A23L 3/22, A23L 2/46, A23L 2/02

(54) **Verfahren und Vorrichtung zur Erhitzung, insbesondere von hochviskosen Produkten**
Method and device for heating, in particular highly viscous products
Procédé et dispositif de chauffage, notamment de produits hautement visqueux

(30) Priorität: 04.08.2009 DE 102009036019
(43) Veröffentlichungstag der Anmeldung: 09.02.2011
(73) Patentinhaber: Krones AG, 93073 Neutraubling (DE)
(72) Erfinder: Feilner, Roland, 93055 Regensburg (DE)
(74) Vertreter: Grünecker, Kinkeldey, Stockmair & Schwanhäusser

(56) Entgegenhaltungen:
- EP-A1- 0 323 654
- WO-A1-2007/046067
- DE-A1- 1 492 360
- DE-A1-102005 055 016
- US-A- 4 850 270
- US-A1- 2005 112 257

## Beschreibung

Die Erfindung betrifft ein Verfahren zur Erhitzung, insbesondere von hochviskosen Produkten sowie eine Vorrichtung zum Durchführen dieses Verfahrens.

Die US 2005/0112257 beschreibt bereits eine Vorrichtung zum Ultrahocherhitzen von Milch, wobei Milch kein hochviskoses Produkt ist. Das Produkt wird aus einem Tank geleitet und über einen Produkt/Produktwärmetauscher erhitzt und in der Mitte des Wärmetauschers abgenommen. Die Milch wird zum Denaturieren in ein Halterohr geleitet und schließlich weiter durch den Produkt/Produktwärmetauscher auf 264°F erhitzt. Im Anschluss erfolgt eine Produkt/Wassererwärmung, wobei anschließend das heiße Produkt zum Erwärmen des Produkts im Wärmetauscher dient. Nach diesem Wärmetauscher wird das Produkt in einen weiteren Wärmetauscher über ein Kühlmedium gekühlt und zum Füller geführt. Es gibt eine Abzweigleitung, über die das sterile Wasser über einen anderen Wärmetauscher erwärmt werden kann. Darüber hinaus sind zwei weitere Wärmetauscher vorgesehen, die dazu dienen, Sterilwasser auf eine Temperatur von 250°F zu bringen.

Die Druckschrift EP 0 323 654 A1 beschreibt ebenfalls bereits eine Vorrichtung zum Erhitzen von Produkten, wobei ein Produkt aus einem Tank mit Hilfe von drei Wärmetauschern erwärmt wird und über weitere drei Wärmetauscher abgekühlt wird.

Die US 4,850,270 beschreibt ein System zur aseptischen Behandlung von Flüssigkeiten mit Feststoffpartikeln.

Die Druckschrift WO 2007/046067 A1 zeigt bereits eine Vorrichtung zum temperaturgesteuerten Behandeln von Lebensmittelprodukten wie Milch etc.

Die DE 10 2005 055 016 A1 betrifft bereits ein Verfahren und einen Röhren-Wärmetauscher zur thermischen Behandlung von hochviskosen Produkten der Nahrungsmittel- und Getränkeindustrie.

Die Druckschrift DE 1 492 360 A1 zeigt eine Vorrichtung zum Entkeimen bzw. zur Keiminaktivierung von Flüssigkeiten.

Derzeit gibt es grundsätzlich zwei unterschiedliche Prozesse zur thermischen, aseptischen Erhitzung mittels Wärmetauscher.

Zum einen gibt es den Produkt-gegen-Produkt-Prozess. Dabei werden Wärmetauscher verwendet, bei denen das einlaufende Produkt durch Produkt, das vorab auf eine höhere Temperatur erhitzt wurde, erwärmt wird. Dazu eignen sich insbesondere Plattenwärmetauscher, aber bei entsprechend hygienischer Ausführung der Sekundärseite auch Rohrbündelwärmetauscher. Ein solcher Prozess ermöglicht einen hohen Wärmerückgewinn von 90 bis 95 % und ermöglicht die Reduzierung von Wärmeaustauscherfläche, die zur Erhitzung notwendig ist. Somit können Investitionskosten und Stellfläche gesenkt werden. Nachteilig an dieser Technik ist, dass dieser Prozess bei gängigen Wärmetauschern mit glatten Wärmetauscherflächen nur für niedrigviskose Produkte (bis maximal 5 - 15 mPas) wirtschaftlich geeignet ist. Es gibt mittlerweile auch Wärmetauscher, die eine unebene, strukturierte Oberfläche zum Verbessern des Wärmeübergangs aufweisen. Bei diesen Wärmetauschern kann die Viskosität zwar etwas höher sein, jedoch gibt es auch hier Grenzen für die Viskosität (bis maximal 25 mPas), sodass Produkte wie Sirupe und Smoothies auch nicht wirtschaftlich erwärmt werden können. Es hat sich gezeigt, dass der beidseitig, durch die hohe Viskosität bedingte, schlechte Wärmeübergang, eine im Vergleich zu einer Produkt gegen Wasser Anwendung, größere Wärmetauscherfläche benötigt und damit wirtschaftlich seine Anwendungsgrenze erreicht.

Deshalb wird insbesondere für hochviskose Produkte ein Produkt gegen Wasserprozess verwendet. Dieser Prozess ist für alle Produkte, auch für die mit einer hohen Viskosität, geeignet, also Produkten mit Viskositäten > 15 mPas. Er weist eine hohe Flexibilität in Bezug auf Temperatur und Produktspreizungen (d.h. Produkten unterschiedlicher Viskosität, die auf einer Anlage gefahren werden) auf. Nachteilig an diesem Prozess ist jedoch der geringere Wärmerückgewinn (80 bis 87 %). Es ergeben sich hier höhere Investitionskosten aufgrund von größeren nötigen Wärmetauscherflächen und damit zu verbauenden Wärmetauschermodulen.

Hiervon ausgehend liegt der vorliegenden Erfindung die Aufgabe zugrunde, ein Verfahren sowie eine Vorrichtung zum Erhitzen von Produkten bereitzustellen, die auch zum Erhitzen von hochviskosen Produkten geeignet sind, und einen hohen Wärmerückgewinn bei geringen Investitionskosten ermöglicht.

Erfindungsgemäß ist diese Aufgabe durch die Merkmale der Ansprüche 1 und 8 gelöst.

Das erfindungsgemäße Verfahren sowie die erfindungsgemäße Vorrichtung erlauben, dass ein Produkt/Produkt - Wärmetauscherprozess auch für hochviskose Produkte möglich ist, wobei hohe Wärmerückgewinnungsraten bei niedrigen Investitionskosten und kompakten Anlagen möglich sind. Gemäß der vorliegenden Erfindung wird also in einem ersten Schritt mit mindestens einer Produkt/Wasser-Wärmetauschersektion das Produkt auf eine erste Temperatur T1 mit Wasser als rekuperatives Heizmedium vorerwärmt, wobei das Wasser abkühlt. Erst dann wird in einem zweiten Schritt das vorerwärmte Produkt in einer Produkt/Produkt-Wärmetauschersektion auf eine zweite Temperatur T2 weiter erhitzt. Durch das Vorwärmen des Produkts in dem ersten Schritt sinkt die Viskosität des Produkts, so dass sich ein besserer Wärmeübergang in der Produkt/Produkt-Wärmetauschersektion - d.h. im zweiten Schritt - ergibt. In dem dritten Schritt kann dann eine Hocherhitzung auf die gewünschte Produktbehandlungstemperatur mit Heizwasser erfolgen. Das im dritten Schritt erhitzte Produkt kann dann rückgeführt werden und als Heizmedium zum Erwärmen des Produkts in Schritt zwei dienen. Im Vergleich zur klassischen Wasserschaukel erlaubt dieses Verfahren bzw. diese Vorrichtung eine kleinere Anlagenperipherie, geringere Pumpenanzahl und Ausgleichswärmetauscher. Es sind weniger Wärmetauschersektionen bzw. Module als bei der klassischen Wasserschaukel bei einer besseren Wärmerückgewinnung (90 bis 95 %) nötig. Der Wirkungsgrad ist nur minimal geringer als bei den klassischen Produkt/Produktanwendungen. Das erfindungsgemäße Verfahren bzw. die erfindungsgemäße Vorrichtung erlauben eine höhere Flexibilität in Bezug auf Schwankung der Einlauftemperaturen und die direkt daraus resultierenden Auslauftemperaturen, weil mit der vorgschalteten Produkt/Wasser Sektion sekundärseitig in Bezug auf Temperatur und Durchfluss der Wärmeübergang eingestellt werden kann. Die Entgasungs- oder auch die Homogenisierungstemperatur ist unabhängig vom eingeschnürten Produkt/Produktprozess in der ersten Sektion, weil mit der vorgschalteten Produkt/Wasser Sektion sekundärseitig in Bezug auf Temperatur und Durchfluss der Wärmeübergang eingestellt werden kann. Die Tieftemperatursektionen werden nicht rekuperativ mit Produkt als Kühlmedium gefahren.

Gemäß einer bevorzugten Ausführungsform der vorliegenden Erfindung wird das Produkt, das in Schritt zwei abgekühlt worden ist, in einem vierten Schritt mit mindestens einer Produkt/Wasser-Wärmetauschersektion 4a auf eine Temperatur T5 abgekühlt, wobei als Kühlmedium Wasser, das in dem ersten Schritt abgekühlt wurde, verwendet wird.

Somit kann in vorteilhafter Weise das Heizmedium des Schrittes 1, das im Schritt 1 abkühlt, zum Kühlen des rücklaufenden Produkts verwendet werden, was den Wirkungsgrad des Verfahrens bzw. der Vorrichtung deutlich verbessert. Es ist vorteilhaft, wenn das erwärmte Wasser aus dem vierten Schritt im Kreislauf geführt wird und in Schritt 1 als Heizmedium für das Vorwärmen des Produkts verwendet wird, wobei dann das in Schritt 1 abgekühlte Wasser wiederum als Kühlmedium in Schritt 4 dienen kann. Der Wasserkreislauf zwischen aufzuwärmenden Produkt und zu kühlendem Rücklaufprodukt verbessert wiederum den Wärmerückgewinn.

Vorteilhafterweise wird das Produkt in Schritt eins auf eine Temperatur T1 erhitzt, so dass die Viskosität des Produkts dann kleiner als 15 mPa · s vorzugsweise kleiner 5 mPa · s ist. Bei dem Einsatz speziell strukturierter Innenrohre zur erhöhten Turbulenzerzeugung bei Röhrenwärmetauschern, kann sich der Viskositätsbereich nach oben verschieben. Das heißt, dass für diesen Anwendungsfall dann die Viskosität am Auslauf des ersten Wärmetauscherbereichs kleiner als 25 mPa · s, vorzugsweise kleiner 10 mPa · s sein soll. Bei dem Einsatz eines Plattenwärmetauschers kann sich der Viskositätsbereich noch weiter nach oben verschieben. Somit kann ein guter Wärmeübergang sichergestellt werden. Das Produkt muss also in dem Aufwärmebereich eins in Schritt 1 so hoch erhitzt werden, dass die Austrittsviskosität als Indikator unter einen kritischen Wert fällt. Die genauen Temperatur-und Viskositätswerte sind jedoch abhängig vom jeweiligen Produkt. Neben der Viskosität sinkt mit steigender Temperatur die Dichte und es steigt mit steigender Temperatur die Wärmekapazität und die Wärmeleitfähigkeit, was ebenfalls den Wärmeübergang und die Effektivität einer Produkt/Produkt Anwendung steigen lässt.

Erfindungsgemäß ist T1 < T2 < T3, d.h., dass in den Aufwärmbereichen die Temperatur des Produkts erhöht wird, wobei die Temperatur T3 dann der gewünschten Produktbehandlungstemperatur entspricht, die beispielsweise für die thermische Behandlung des Produkts notwendig ist um dessen mikrobiologische Stabilität zu gewährleisten.

Die Erfindung ermöglicht das Erwärmen von Produkten, deren Ausgangsviskosität bei 20°C und entsprechender Scherrate (beispielsweise 300 bis 800 1/s), in einem Bereich > 5 mPa · s, vorzugsweise in einem Bereich von 5 mPa · s bis 100 mPa · s liegt. Vorteilhafterweise kann bei Leistungsregulation das Produkt über einen Produktbypass an dem ersten Wärmetauscherbereich, d.h. an der mindestens einen Produkt/Wasser-Wärmetauschersektion vorbei geleitet werden.

Die erfindungsgemäße Vorrichtung zum Durchführen des Verfahrens weist zum Durchführen der Schritte 1, 2, 3 einen entsprechenden ersten, zweiten und dritten Aufwärmebereich auf, der jeweils mindestens eine Wärmetauschersektion umfasst. Eine Wärmetauschersektion umfasst dabei mindestens einen Wärmetauscher, insbesondere mindestens einen Rohrbündelwärmetauscher oder Plattenwärmetauscher. Gibt es mehrere Wärmetauschersektionen in einem Aufwärmbereich, so sind diese produktseitig in Reihe geschaltet. Die Aufwärmbereiche bzw. deren Wärmetauschersektionen sind derart miteinander verschaltet, das zur Vorwärmung im ersten Aufwärmbereich Wasser als Heizmedium zuleitbar ist und im zweiten Aufwärmbereich rücklaufendes Produkt, das in einem dritten Aufwärmbereich mit Wasser erhitzt wurde.

Die vorliegende Erfindung wird nachfolgend unter Bezugnahme auf folgende Figuren näher erläutert:
- Fig. 1: zeigt schematisch den Aufbau einer Vorrichtung zum Durchführen des erfindungs-gemäßen Verfahrens gemäß einem bevorzugten Ausführungsbeispiel.
- Fig. 2: zeigt grob schematisch einen Schnitt durch eine Rohrbündelwärmetauschermodul
- Fig. 3: zeigt ein Diagramm, das den Verlauf der Viskosität, Dichte, Wärmekapazität und Wärmeleitfähigkeit eines Produkts in Abhängigkeit der Temperatur zeigt.
- Fig. 4: zeigt schematisch mehrere in Reihe angeordnete Wärmetauscher.

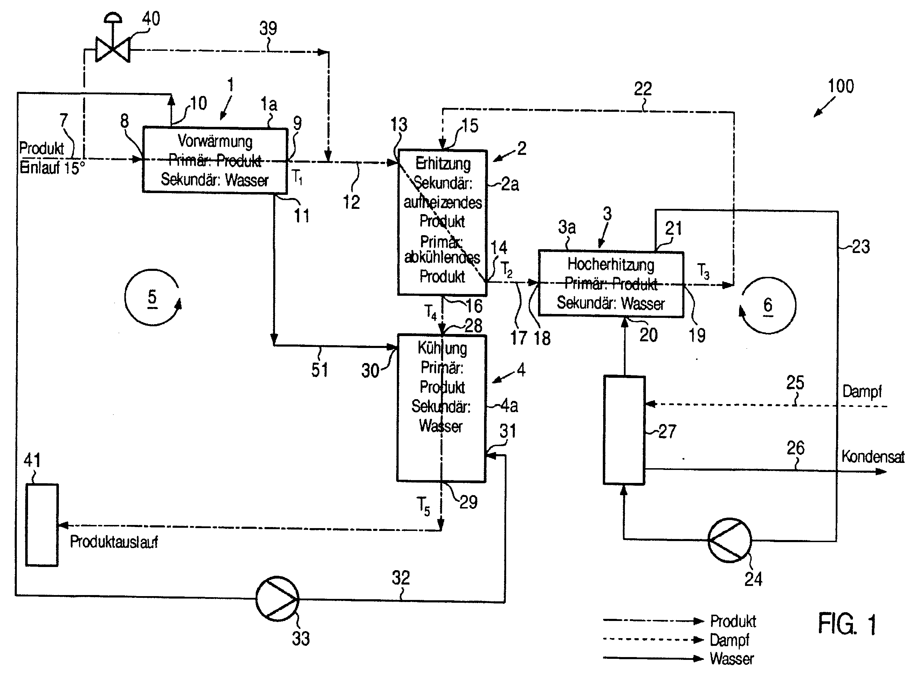

Fig. 1 zeigt eine Vorrichtung zum Erhitzen eines Produkts, insbesondere zur thermischen Erhitzung eines Produkts. Eine solche Vorrichtung findet insbesondere in der Getränkeindustrie zum Sterilisieren von Getränken oder anderen flüssigen Lebensmitteln ihre Anwendung. Die Vorrichtung ist jedoch auch geeignet für alle rekuperativen Anwendungen, insbesondere zum Erwärmen von hochviskosen Produkten.

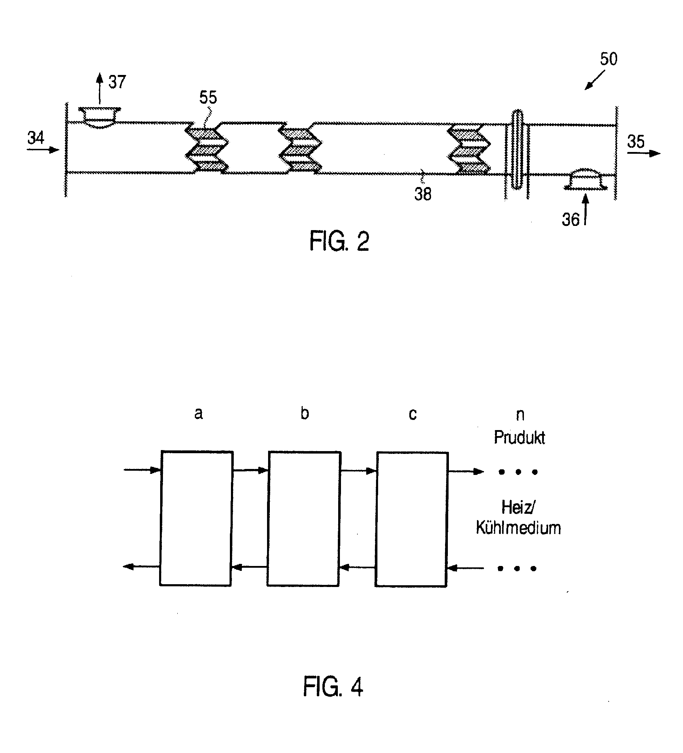

Wie aus Fig. 1 hervorgeht, weist die Vorrichtung einen Produkteinlauf 7 auf, durch den das Produkt in die Vorrichtung einläuft. Der Verlauf des zu erwärmenden Produkts wird durch die Strichpunktlinie dargestellt, der Verlauf des Wassers durch die durchgezogene Linie, und der Verlauf von Dampf durch die gestrichelten Linien. Die Vorrichtung weist einen ersten Aufwärmbereich 1 auf, der mindestens eine Produkt/Wasser-Wärmetauschersektion 1a umfasst, mit der das Produkt auf eine Vorwärmtemperatur T1 mit Wasser als Heizmedium vorwärmbar ist. In Fig. 1 ist nur eine Wärmetauschersektion 1a gezeigt. Es können jedoch auch mehrere erste Produkt/Wärmetauschersektionen 1a in Reihe hintereinander geschaltet werden. Fig. 4 zeigt in allgemeiner Art und Weise eine Reihenschaltung von Wärmetauschersektionen, wobei der Auslauf einer ersten Sektion a mit dem Zulauf einer nachfolgenden Sektion b zur Erwärmung oder Kühlung eines Produkts verbunden ist. Gleichermaßen ist der Auslauf einer Sektion c für ein Heiz-Kühlmedium mit dem Zulauf einer in Strömungsrichtung des Mediums nachfolgenden Sektion b verbunden.

Die Produkt/Wasser-Wärmetauschersektion 1a weist hier einen Zulauf 8 für das Produkt und einen Auslauf 9 für das erwärmte Produkt auf. Weiter weist die Wärmetauschersektion 1a einen Zulauf 11 für Heizmedium (hier: Wasser) und einen Auslauf 10 für das abgekühlte Heizmedium auf. Über eine entsprechende Leitung 12 ist der erste Aufwärmebereich mit einem zweiten Aufwärmebereich 2 verbunden. Der zweite Aufwärmbereich 2 weist auch mindestens eine Produkt/Produkt-Wärmetauschersektion 2a auf, mit der das vorgewärmte Produkt aus dem Aufwärmebereich 1 weiter mit erhitztem rücklaufenden Produkt als Heizmedium auf eine Temperatur T2 erhitzbar ist. Hier weist die Produkt/Produkt-Wärmetauschersektion 2a einen Zulauf 13 für zu erwärmendes Produkt auf, sowie einen Auslauf 14 für erwärmtes Produkt. Ferner weist die Wärmetauschersektion 2a einen Zulauf 15 für ein Heizmedium, hier rücklaufendes Produkt, und einen Auslauf 16 für abgekühltes rücklaufendes Produkt. Vorzugsweise werden die beiden Ströme in allen beschriebenen Sektionen im Gegenstrom geführt.

Der Auslauf 14 der Wärmetauschersektion 2a ist über eine Leitung 17 mit dem Zulauf 18 der Produkt/Wasser-Wärmetauschersektion 3a eines dritten Aufwärmebereichs 3 verbunden, wobei der dritte Aufwärmebereich 3 mindestens eine Produkt/Wasser-Wärmetauschersektion 3a umfasst. Die Produkt/Wasser-Wärmetauschersektion 3a erwärmt das Produkt aus dem zweiten Aufwärmebereich 2 weiter mit Wasser als Heizmedium auf eine Temperatur T3. Die Wärmetäuschersektion 3a weist einen Auslauf 19 für erhitztes, rücklaufendes Produkt auf und weiter einen Zulauf 20 für das Heizmedium, hier: Wasser bzw. Dampf, und einen Auslauf 21 für das abgekühlte Heizmedium.

Von dem Auslauf 19 wird das auf eine Produktbehandlungstemperatur T3 erhitzte Produkt über die Leitung 22 zurück zum zweiten Aufwärmebereich 2 als Heizmedium zurückgeleitet. Insbesondere tritt das rücklaufende Produkt in den Zulauf 15 der Wärmetauschersektion 2a ein und kann so das Produkt, das über den Zulauf 13 zugeführt wird, erwärmen. Dadurch kühlt das rücklaufende Produkt, das Heizmedium für den dritten Aufwärmebereich 3 ist, vorzugsweise im Gegenstrom ab.

Weiter ist eine Zuleitung für Dampf 25 vorgesehen, die einem Heißwasserbereiter 27 Dampf zuführt, sodass dann Heißwasser über den Zulauf 20 dem dritten Aufwärmbereich 3, d.h. der Wärmetauschersektion 3a, zugeführt wird. Über die Leitung 23 wird der Ablauf 21 über den Heißwasserbereiter 27 mit dem Zulauf 20 verbunden, so dass der Kreislauf 6 gebildet wird. Das Kondensat wird über die Kondensatleitung 26 aus dem Heißwasserbereiter 27 abgeleitet, während neuer Dampf über die Leitung 25 zugeführt werden kann. Über die Pumpe 24 wird das Heißwasser im Kreis gepumpt.

Im Anschluss an den zweiten Aufwärmebereich 2 folgt ein Kühlbereich 4, der mindestens eine Produkt/Wasser-Wärmetauschersektion 4a umfasst. Hier weist die Wärmetauschersektion 4a einen Zulauf 28 für rücklaufendes zu kühlendes Produkt auf und einen Auslauf 29 für das gekühlte Produkt. Weiter weist die Sektion 4a einen Auslauf 30 für das dann erwärmte Wasser auf. Der Auslauf 30 ist über die Leitung 51 mit dem Einlauf 11 der Wärmetauschersektion 1a verbunden. Somit kann dem Vorwärmbereich als Heizmedium das in der Sektion 4a erwärmte Wasser zugeleitet werden. Über den Auslauf 10 der Sektion 1a kann über die Kreislaufleitung 32 dann dem Einlauf 31 das aus Sektion 1a gekühlte Wasser erneut zugeführt werden. Über die Pumpe 33 kann das Wasser im Kreislauf gepumpt werden. Die Produkt/Wasser-Wärmetauschersektion 4a weist weiter einen Ablauf 29 für rücklaufendes abgekühltes Produkt auf. Optional ist noch ein weiterer nicht rekuperativer Tiefkühler 41 vorgesehen.

Schließlich kann optional eine Bypassleitung 39 vorgesehen sein, die den ersten Aufwärmebereich 1 im Teilstrom überbrücken kann. Dazu ist in der Leitung 39 ein entsprechendes Regelventile 40 vorgesehen.

Wie bereits erwähnt, ist in der Fig. 1 für die einzelnen Aufwärmebereiche bzw. den Kühlbereich jeweils nur eine Wärmetauschersektion dargestellt. Diese Aufwärmebereiche können jedoch beliebig viele Sektionen enthalten, die dann produktseitig jeweils in Reihe geschaltet sind und als Einheit dann wie die in Figur 1 dargestellten Sektionen verschaltet sind. D.h. der jeweilige Zulauf für mehrere Sektionen erfolgt z.B. über den Zulauf der ersten Sektion und der Ablauf über den Ablauf der letzten der in Reihe angeordneten Sektionen.

Eine Wärmetauschersektion umfasst dabei mindestens ein Wärmetauschermodul. In Fig. 2 ist ein Beispiel für ein Röhrenwärmetauschermodul gezeigt, das z.B. bei dem in Fig 1. geflächen aufweist. Glatte Oberflächen sind aus hygienischen Gründen vorteilhaft. Das Modul zeigt einen sekundärseitigen Zulauf 36 und einen sekundärseitigen Auslauf 37, die bei dieser Ausführungsform im Mantel 38 oder Außenrohr des Wärmetauschers angeordnet sind. Weiter weist der Rohrbündelwärmetauscher mehrere Rohrbündel mit einem entsprechenden primärseitigen Zulauf 34 und Ablauf 35 auf. Als primärseitig wird die Durchströmung der Innenrohre 55 des Moduls bezeichnet. Vorteilhafterweise fließt das Produkt, das erhitzt werden soll, bei einem Produkt/Wasser-Röhrenwärmetauscher in den Röhren 55, also primär. Bei einem Produkt/Produkt-Wärmetauscher fließt das aufzuheizende Produkt, das noch nicht steril ist, außerhalb der Röhren 55, also sekundär, und das sterile erhitzte Produkt primär, d.h. in den Röhren 55. Dies liegt daran, dass man den Innenrohren eine höhere hygienische Sicherheit zuspricht.

Wenn in einer Sektion mehrere Wärmetauschermodule angeordnet sind, so sind diese in Reihe angeordnet, d.h., dass der Ablauf 35 eines ersten Moduls mit dem Zulauf 34 eines nachfolgenden Moduls verbunden ist und der Ablauf 37 mit dem Zulauf 36 eines nachfolgenden Moduls.

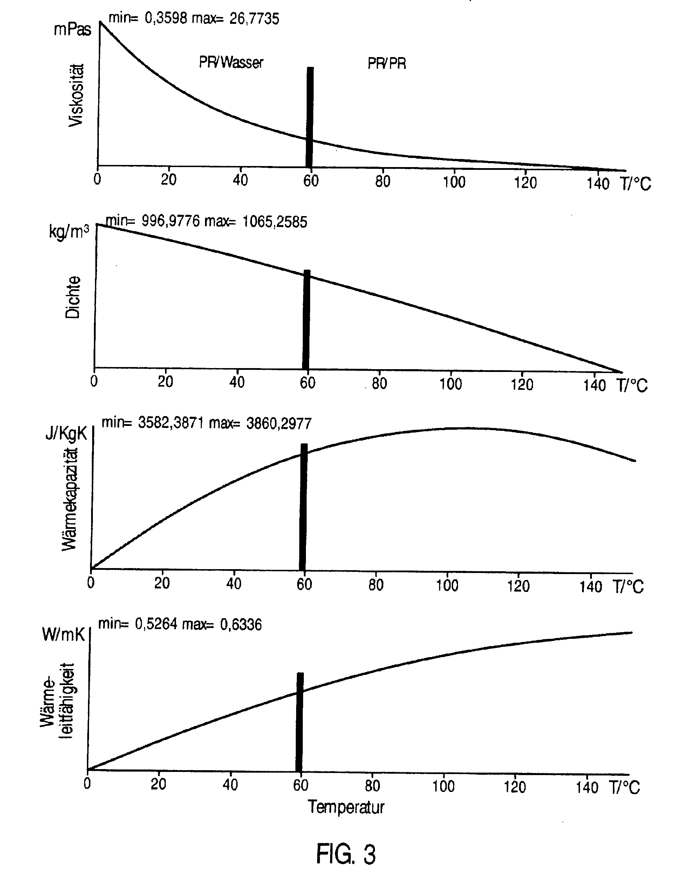

Nachfolgend wird das erfindungsgemäße Verfahren unter Bezugnahme der Fig. 1 näher erläutert. Das erfindungsgemäße Verfahren eignet sich insbesondere für hochviskose Produkte mit einer Viskosität > 5 - 100 mPas Wie insbesondere in Fig. 3 dargestellt ist, ist die Viskosität eines Produkts abhängig von der Produkttemperatur. Fig. 3 zeigt ein Produkt, das bei einer Temperatur von 20 °C eine hohe Ausgangsviskosität, z. B. von 20 mPas, aufweist. Wie aus Fig. 3 hervorgeht, ist bei Temperaturen < 60 °C die Viskosität so hoch, dass ein Produkt/Produkt-Wärmetauscherprozess aufgrund des schlechten Wärmeübergangs unwirtschaftlich ist. Erst in einem Bereich > ca. 60 °C sinkt die Viskosität so stark, dass auch ein Produkt/Produkt-Wärmetauscherprozess wirtschaftlich möglich ist. Gleichzeitig nimmt mit steigender Temperatur auch die Dichte ab und die Wärmekapazität und die Wärmeleitfähigkeit steigen. Aus diesem Grund wird das Produkt, das beispielsweise mit einer Temperatur von 5° bis 35 °C, hier z.B. 15 °C, in die Vorrichtung einläuft, in einem ersten Schritt mit mindestens einer Produkt/Wasser-Wärmetauschersektion 1a auf eine erste Temperatur T1 mit Wasser als Heizmedium vorgewärmt, wobei das Heizmedium abkühlt. Das Produkt wird dabei in dem Schritt 1 so hoch erhitzt, dass die Austrittsviskosität als Indikator, aber auch die Dichte, die Wärmeleitfähigkeit und die Wärmekapazität unter einen kritischen Wert fällt. Das heißt, dass die Viskosität am Auslauf 9 bei glatten Rohroberflächen kleiner als 15 mPa · s, vorzugsweise kleiner 5 mPa · s sein soll. Bei dem Einsatz speziell strukturierter Innenrohre bei Röhrenwärmtauscher, kann sich der Viskositätsberich stark nach oben verschieben. Das heißt, dass für diesen Anwendungsfall dann die Viskosität am Auslauf 9 kleiner als 25 mPa · s, vorzugsweise kleiner 10 mPa · s sein soll. Bei dem Einsatz eines Plattenwärmetauschers kann sich der Viskositätsbereich noch weiter nach oben verschieben. Die Temperatur T1, auf die das Produkt erwärmt wird, liegt dabei beispielsweise in einem Bereich zwischen 30 °C und 80 °C, vorzugsweise 50 °C bis 70 °C, abhängig von der Ausgangsviskosität des Produkts. Hier wird das Produkt primärseitig zugeführt und das Heizmedium Wasser sekundärseitig.

Das vorgewärmte Produkt, das jetzt nicht mehr hochviskos ist, kann nun in einem zweiten Schritt mit mindestens einer Produkt/Produkt-Wärmetauschersektion 2a auf eine zweite Temperatur T2 mit rücklaufendem Produkt als Heizmedium weiter erhitzt werden, wobei das rücklaufende, als Heizmedium dienende Produkt abkühlt. Das Produkt kann somit auf eine Temperatur T2 beispielsweise in einem Bereich von 72 °C bis 135 °C erwärmt werden.

In der Produkt/Produkt-Wärmetauschersektion 3a wird das zu erwärmende Produkt sekundärseitig zugeführt und das rücklaufende abkühlende Produkt primärseitig. In einem dritten Schritt wird das Produkt dann mit mindestens einer Produkt/Wasser-Wärmetauschersektion 3a auf eine dritte Temperatur T3 mit Wasser als Heizmedium weiter erhitzt, wobei das Wasser vorzugsweise im Gegenstrom abkühlt. Das Produkt kann hier auf die gewünschte Produktbehandlungstemperatur, z.B. zum Sterilisieren, hocherhitzt werden. Die Temperatur kann beispielsweise in einem Bereich von 90 °C bis 140 °C liegen. Das Heizmedium, d.h. hier das Wasser, wird im Kreislauf 6 geführt, wobei über eine Leitung 25 dem Heißwasserbereiter Dampf zugeführt wird und über eine Leitung 26 Kondensat abgeführt wird.

Das hocherhitzte Produkt wird dann über die Leitung 22 zu dem zweiten Aufwärmebereich 2 rückgeführt und dient hier als Heizmedium, wobei es gleichzeitig auf eine Temperatur T4 abgekühlt wird, die kleiner ist als die Temperatur T3. Die Temperatur T4 kann beispielsweise in einem Bereich von 55 °C bis 65 °C liegen.

Zum weiteren Abkühlen des rücklaufenden Produkts wird das Produkt in dem Kühlbereich 4 über die mindestens einen Produkt/Wasser-Wärmetauschersektion 4a auf eine Temperatur T5 abgekühlt. Die Temperatur T5 liegt beispielsweise in einem Bereich zwischen 17 °C und 25 °C. Die Zuführung des zu kühlenden Produkts erfolgt primärseitig, die Zuführung des Kühlmediums, hier des Wassers, erfolgt sekundärseitig. Das abgekühlte rücklaufende Produkt kann optional zu einem weiteren Kühler 41 zu einem Puffertank oder direkt zu einer Abfüllvorrichtung erfolgen. Das Kühlmedium, das für den Kühlbereich 4 verwendet wird, ist Das Kühlmedium hat bei Eintritt in den Kühlbereich, hier abhängig von der Produkteinlauftemperatur: beispielsweise eine Temperatur von 10 °C bis 15 °C. Das Wasser, das durch den Kühlbereich geführt wird, wird zu dem Vorwärmbereich 1 im Kreislauf gepumpt und dient wiederum als Heizmedium zum Vorwärmen des Produkts. Dieses Heizmedium hat beim Eintritt in den ersten Aufwärmebereich 1 beispielsweise eine Temperatur in einem Bereich von 55 °C bis 75 °C. Somit kann in effektiver Art und Weise das Kühlmedium des Kühlbereichs 4 zur Vorwärmung des Produkts verwendet werden, damit die Viskosität des Produkts gesenkt werden kann.

Bei Leistungsregulation des Produktes zur Ankühlung kann es vorteilhaft sein, das Produkt nicht durch den Aufwärmebereich 1 zu leiten, sondern einen Teilstrom über den Produktbypass 39 bei geregeltem Ventil 40 an dem ersten Aufwärmbereich 1 vorbei zu leiten und kalt dem Produkt nach Auslauf 9 zuzumischen, wobei das Durchflussverhältnis zwischen Bypassleitung 39 und Aufwärmebereich 1 durch das Regelventil 40 einstellbar ist.

Bei dem vorherigen Ausführungsbeispiel wurde als Heizmedium Wasser angegeben. Im Kreislauf 5 und 6 befindet sich das Wasser in seiner flüssigen Phase. Im Kreislauf 6 wird dem Kreislaufwasser über den Heißwasserbereiter 27 kontinuierlich mit Dampf die Energie zugeführt, die bei der Erhitzung in Stufe 3 in das Produkt übergeht.

Die vorliegende Erfindung ermöglicht also einen Produkt/Produkt-Wärmetauscherprozess auch für hochviskose Produkte, wie beispielsweise Fruchtsäfte, Sirupe, Smoothies.

## Patentansprüche

1. Verfahren zur Erhitzung, insbesondere von hochviskosen Produkten, wobei das Produkt
in einem ersten Schritt mit mindestens einer Produkt/Wasser-Wärmetauschersektion (1 a) auf eine erste Temperatur (T1) mit Wasser als Heizmedium vorgewärmt wird, wobei das Wasser abkühlt,
in einem zweiten Schritt (2) mit mindestens einer Produkt/Produkt-Wärmetauschersektion (2a) auf eine zweite Temperatur (T2) mit Produkt als Heizmedium weiter erhitzt wird, wobei das als Heizmedium dienende Produkt abkühlt,
in einem dritten Schritt (3) mit mindestens einer Produkt/Wasser-Wärmetauschersektion (3a) auf eine dritte Temperatur (T3) mit Wasser als Heizmedium weiter erhitzt wird, wobei das Wasser abkühlt und wobei das erhitzte Produkt dann als Heizmedium zum Erwärmen des Produkts im zweiten Schritt rückgeführt wird.

2. Verfahren nach Anspruch 1, **dadurch gekennzeichnet, dass**, nachdem das rückgeführte Produkt im zweiten Schritt abgekühlt worden ist, das Produkt in einem vierten Schritt mit mindestens einer Produkt/Wasser-Wärmetauschersektion (4a) auf eine Temperatur (T5) abgekühlt wird, wobei als Kühlmedium Wasser, das in dem ersten Schritt abgekühlt wurde, verwendet wird.

3. Verfahren nach Anspruch 2, **dadurch gekennzeichnet, dass** das erwärmte Wasser aus dem vierten Schritt im Kreislauf geführt wird und im ersten Schritt als Heizmedium für das Vorwärmen des Produkts dient, und das im ersten Schritt abgekühlte Wasser als Kühlmedium (4) in Schritt vier dient.

4. Verfahren nach mindestens einem der Ansprüche 1 bis 3, **dadurch gekennzeichnet, dass** das Produkt im Schritt 1 auf eine Temperatur erhitzt wird, so dass die Viskosität des Produkts kleiner als 25 mPa·s bei strukturierten Wärmetauscherflächen und kleiner als 15 mPa·s bei glatten Wärmetauscherflächen ist.

5. Verfahren nach mindestens einem der Ansprüche 1 bis 4, **dadurch gekennzeichnet, dass** T1 < T2 < T3.

6. Verfahren nach mindestens einem der Ansprüche 1 bis 5, **dadurch gekennzeichnet, dass** die Ausgangsviskosität des zu erwärmenden Produkts bei 20° in einem Bereich > 5 mPa·s vorzugsweise in einem Bereich von 5 bis 100 mPa·s liegt.

7. Verfahren nach mindestens einem der Ansprüche 1 bis 6, **dadurch gekennzeichnet, dass** zur Leistungsregulation das Produkt über einen Produktbypass (39) an der mindestens einen Produkt/Wasser-Wärmetauschersektion (3a) im Teilstrom vorbeigeleitet wird.

8. Vorrichtung (100) zum Durchführen des Verfahrens nach mindestens einem der Ansprüche 1 bis 7, mit
einem Produkteinlauf (7),
einem ersten Aufwärmebereich (1), der mindestens eine Produkt/Wasser-Wärmetauschersektion (1 a) umfasst, mit der das Produkt auf eine Vorwärmtemperatur (T1) mit Wasser als Heizmedium vorwärmbar ist,
einem zweiten Aufwärmebereich (2), der mindestens eine Produkt/Produkt-Wärmetauschersektion (2a) umfasst, mit der vorgewärmtes Produkt aus dem Aufwärmebereich (1) weiter mit Produkt als Heizmedium auf eine Temperatur (T2) erhitzbar ist, und
einem dritten Aufwärmebereich (3), der mindestens eine Produkt/Wasser-Wärmetauschersektion (3a) umfasst, mit der das erwärmte Produkt aus dem zweiten Aufwärmebereich (2) weiter mit Wasser als Heizmedium auf eine Temperatur (T3) erhitzbar ist, wobei das erhitzte Produkt aus dem dritten Aufwärmebereich (3) dem zweiten Aufwärmebereich (2) als Heizmedium rückgeführt wird.

9. Vorrichtung (100)nach Anspruch 8, **dadurch gekennzeichnet, dass** eine Wärmetauschersektion (1 a, 2a, 3a, 4a) mindestens einen Wärmetauscher (50), insbesondere mindestens einen Rohrbündelwärmetauscher oder Plattenwärmetauschersektion umfasst.

10. Vorrichtung (100) nach Anspruch 8 oder 9, **dadurch gekennzeichnet, dass** die Wärmetauschersektionen (1a, 2a, 3a, 4a) eines jeweiligen Aufwärmebereiches (1, 2, 3, 4) in Reihe geschaltet sind.

11. Vorrichtung (100) nach mindestens einem der Ansprüche 8 bis 10, **dadurch gekennzeichnet, dass** die Vorrichtung weiter umfasst:
einen Kühlbereich (4), der mindestens eine Produkt/Wasser-Wärmetauschersektion (4a) umfasst, durch die das in dem zweiten Aufwärmebereich (2) abgekühlte Produkt weiter auf eine Temperatur (T5) abkühlbar ist, wobei als Kühlmedium, das in dem ersten Aufwärmebereich (1) abgekühlte Wasser zuleitbar ist.

12. Vorrichtung (100) nach mindestens einem der Ansprüche 8 bis 11, **dadurch gekennzeichnet, dass** die Vorrichtung einen Wasserkreislauf (5) umfasst, in dem der Kühlbereich (4) mit dem ersten Aufwärmbereich (1) verbunden ist, derart, dass aufgewärmtes Wasser aus dem Kühlbereich (4) in den ersten Aufwärmebereich (1) als Heizmedium zum Vorwärmen des Produkts zuleitbar ist und das abgekühlte Wasser des ersten Aufwärmebereiches (1) als Kühlmedium dem Kühlbereich (4) zuleitbar ist.

13. Vorrichtung nach mindestens einem der Ansprüche 8 bis 12, **dadurch gekennzeichnet, dass** die Vorrichtung weiter eine Produktbypassleitung (39) umfasst, mit der das Produkt an dem ersten Aufwärmebereich (1) vorbei leitbar und direkt dem zweiten Aufwärmebereich (2) zuleitbar ist.

## Claims

1. Method for heating, in particular of highly viscous products, where the product
is pre-heated to a first temperature (T1) in a first step with at least one product/water heat exchanger section (1a) with water as the heating medium, wherein the water cools down,
is further heated to a second temperature (T2) in a second step (2) with at least one product/product heat exchanger section (2a) with the product as a heating medium, wherein the product serving as heating medium is cooled down,
is further heated to a third temperature (T3) in a third step (3) with at least one product/water heat exchanger section (3a) with water as the heating medium, wherein the water cools down and wherein the heated product is then recirculated as heating medium for heating the product in the second step.

2. Method according to claim 1, **characterized in that**, after the recirculated product has been cooled down in the second step, the product is cooled down to a temperature (T5) in a fourth step with at least one product/water heat exchanger section (4a), where water that has been cooled down in the first step is used as cooling medium.

3. Method according to claim 2, **characterized in that** the heated water of the fourth step is circulated and serves as heating medium for pre-heating the product in the first step, and the water cooled down in the first step serves as cooling medium (4) in step four.

4. Method according to at least one of claims 1 to 3, **characterized in that** the product is heated to a temperature in step 1, such that the viscosity of the product is lower than 25 mPa·s with structured heat exchanger areas and lower than 15 mPa·s with smooth heat exchanger areas.

5. Method according to one of claims 1 to 4, **characterized in that** T1 < T2 < T3.

6. Method according to at least one of claims 1 to 5, **characterized in that** the initial viscosity of the product to be heated at 20°C is within a range of > 5 mPa·s, preferably within a range of 5 to 100 mPa·s.

7. Method at least according to one of claims 1 to 6, **characterized in that** for performance regulation, the product is passed by the at least one product/water heat exchanger section (3a) in a partial flow via a product bypass (39).

8. Device (100) for performing the method according to at least one of claims 1 to 7, having
a product inlet (7),
a first heating region (1) which comprises at least one product/water heat exchanger section (1 a) by which the product can be pre-heated to a pre-heating temperature (T1) with water as the heating medium,
a second heating region (2) comprising at least one product/product heat exchanger section (2a) by which pre-heated product from the heating region (1) can be further heated to a temperature (T2) with the product as the heating medium, and
a third heating region (3) comprising at least one product/water heat exchanger section (3a) by which the heated product from the second heating region (2) can be further heated to a temperature (T3) with water as the heating medium, wherein the heated product from the third heating region (3) is recirculated to the second heating region (2) as heating medium.

9. Device (100) according to claim 8, **characterized in that** a heat exchanger section (1a, 2a, 3a, 4a) comprises at least one heat exchanger (50), in particular at least one tubular heat exchanger or plate heat exchanger section.

10. Device (100) according to claim 8 or 9, **characterized in that** the heat exchanger sections (1a, 2a, 3a, 4a) of a respective heating region (1, 2, 3, 4) are connected in series.

11. Device (100) according to at least one of claims 8 to 10, **characterized in that** the device further comprises:
a cooling region (4) which comprises at least one product/water heat exchanger section (4a) by which the product cooled down in the second heating region (2) can be further cooled to a temperature (T5), wherein the water cooled down in the first heating region (1) can be supplied as cooling medium.

12. Device (100) according to at least one of claims 8 to 11, **characterized in that** the device (5) comprises a water cycle (5) in which the cooling region (4) is connected to the first heating region (1), such that heated water from the cooling region (4) can be supplied to the first heating region (1) as heating medium for pre-heating the product, and the cooled water of the first heating region (1) can be supplied to the cooling region (4) as cooling medium.

13. Device according to at least one of claims 8 to 12, **characterized in that** the device furthermore comprises a product bypass conduit (39) by which the product can be passed by the first heating region (1) and directly to the second heating region (2).

## Revendications

1. Procédé pour chauffer, notamment des produits hautement visqueux, d'après lequel le produit est préchauffé à une première température (T1), au cours d'une première étape, au moyen d'eau comme fluide chauffant, à l'aide d'au moins une section d'échangeur de chaleur produit/eau (1a), l'eau refroidissant à cette occasion,
est chauffé davantage jusqu'à une deuxième température (T2), au cours d'une deuxième étape (2), au moyen de produit comme fluide chauffant, à l'aide d'au moins une section d'échangeur de chaleur produit/produit (2a), le produit servant de fluide chauffant se refroidissant à cette occasion,
est chauffé davantage encore jusqu'à une troisième température (T3), au cours d'une troisième étape (3), au moyen d'eau comme fluide chauffant, à l'aide d'au moins une section d'échangeur de chaleur produit/eau (3a), l'eau refroidissant à cette occasion, et le produit chauffé étant alors recyclé en tant que fluide chauffant pour chauffer le produit au cours de la deuxième étape.

2. Procédé selon la revendication 1, **caractérisé en ce que**, après que le produit recyclé ait été refroidi au cours de la deuxième étape, le produit est refroidi à une température (T5), au cours d'une quatrième étape, à l'aide d'au moins une section d'échangeur de chaleur produit/eau (4a), en utilisant, en guise de fluide de refroidissement, de l'eau qui a été refroidie au cours de la première étape.

3. Procédé selon la revendication 2, **caractérisé en ce que** l'eau échauffée de la quatrième étape est mise en circulation selon un circuit en boucle et sert, au cours de la première étape, en tant que fluide chauffant pour le préchauffage du produit, et l'eau refroidie au cours de la première étape sert de fluide de refroidissement (4) dans l'étape quatre.

4. Procédé selon l'une au moins des revendications 1 à 3, **caractérisé en ce que** le produit est chauffé, au cours de l'étape 1, à une température telle que la viscosité du produit soit inférieure à 25 mPa•s dans le cas de surfaces d'échangeur de chaleur structurées, et inférieure à 15 mPa•s dans le cas de surfaces d'échangeur de chaleur lisses.

5. Procédé selon l'une au moins des revendications 1 à 4, **caractérisé en ce que** T1 < T2 < T3.

6. Procédé selon l'une au moins des revendications 1 à 5, **caractérisé en ce que** la viscosité initiale du produit à chauffer se situe, à 20°, dans un domaine > 5 mPa•s, de préférence dans une plage de 5 à 100 mPa•s.

7. Procédé selon l'une au moins des revendications 1 à 5, **caractérisé en ce que** pour réguler la capacité ou charge, un flux partiel de produit contourne ladite au moins une section d'échangeur de chaleur produit/eau (3a), par une dérivation de produit (39).

8. Dispositif (100) pour la mise en oeuvre du procédé selon l'une au moins des revendications 1 à 7, comprenant
une entrée de produit (7),
une première zone de chauffage (1), qui comporte au moins une section d'échangeur de chaleur produit/eau (1a), à l'aide de laquelle le produit peut être préchauffé à une température de préchauffage (T1) au moyen d'eau comme fluide chauffant,
une deuxième zone de chauffage (2), qui comporte au moins une section d'échangeur de chaleur produit/produit (2a), à l'aide de laquelle du produit préchauffé en provenance de la zone de chauffage (1) peut être chauffé davantage à une température (T2) au moyen de produit comme fluide chauffant, et
une troisième zone de chauffage (3), qui comporte au moins une section d'échangeur de chaleur produit/eau (3a), à l'aide de laquelle le produit chauffé en provenance de la deuxième zone de chauffage (2) peut être chauffé davantage encore à une température (T3), au moyen d'eau comme fluide chauffant, le produit chauffé de la troisième zone de chauffage (3) étant recyclé vers la deuxième zone de chauffage (2), en tant que fluide chauffant.

9. Dispositif (100) selon la revendication 8, **caractérisé en ce qu'**une section d'échangeur de chaleur (1a, 2a, 3a, 4a) comprend au moins un échangeur de chaleur (50), notamment au moins un échangeur de chaleur à faisceaux de tubes ou une section d'échangeur de chaleur à plaques.

10. Dispositif (100) selon la revendication 8 ou la revendication 9, **caractérisé en ce que** les sections d'échangeur de chaleur (1a, 2a, 3a, 4a) d'une zone de chauffage (1, 2, 3, 4) respective, sont montées en série.

11. Dispositif (100) selon l'une au moins des revendications 8 à 10, **caractérisé en ce que** le dispositif comprend en outre :
une zone de refroidissement (4), qui comporte au moins une section d'échangeur de chaleur produit/eau (4a), à l'aide de laquelle le produit ayant été refroidi dans la deuxième zone de chauffage (2), peut être refroidi davantage jusqu'à une température (T5), par amenée d'eau ayant été refroidie dans la première zone de chauffage (1), en guise de fluide de refroidissement.

12. Dispositif (100) selon l'une au moins des revendications 8 à 11, **caractérisé en ce que** le dispositif comprend un circuit de circulation d'eau en boucle (5), dans lequel la zone de refroidissement (4) est reliée à la première zone de chauffage (1) de manière à ce que l'eau échauffée de la zone de refroidissement (4), puisse être transférée dans la première zone de chauffage (1) en tant que fluide chauffant pour préchauffer le produit, et que l'eau refroidie de la première zone de chauffage (1), puisse être transférée à la zone de refroidissement (4) en tant que fluide de refroidissement.

13. Dispositif selon l'une au moins des revendications 8 à 12, **caractérisé en ce que** le dispositif comprend, en outre, une conduite de dérivation de produit (39) au moyen de laquelle le produit peut contourner la première zone de chauffage (1) et être directement amené à la deuxième zone de chauffage (2).
